# EUROPEAN PATENT APPLICATION

(11) **EP 4 052 578 A1**
(43) Date of publication of application: **07.09.2022**
(21) Application number: 21160111.7
(22) Date of filing: 02.03.2021
(51) Int. Cl.: A01N 65/22, A01P 3/00

(54) **METHOD FOR PREPARATION OF EXTRACT FROM FRAXINUS ORNUS AND THE USE THEREOF**

(71) Applicant: Latinovic, Nedeljko, 81000 Podgorica (ME); Jacimovic, Zeljko, 81000 Podgorica (ME); Latinovic, Jelena, 81000 Podgorica (ME)
(72) Inventor: Latinovic, Nedeljko, 81000 Podgorica (ME); Jacimovic, Zeljko, 81000 Podgorica (ME); Latinovic, Jelena, 81000 Podgorica (ME)
(74) Representative: Pejcinovic, Tomislav

(57) **Abstract**

The present invention describes method wherein the natural extract of *Fraxinus ornus* has been found to be efficient against *Plasmopara viticola* and at the same time does not have negative effect on the environment as well as human health.

## Description

### FIELD OF INVENTION

This invention relates to the field of plant protection, especially to the protection against downy mildew.

### TECHNICAL PROBLEM

Technical problem this invention aims to solve is to provide plant protection treatment, especially solution to grapevine protection against downy mildew that would at the same time be efficient, not causing any health related problems for human, ecological and sustainable.

### BACKGROUND OF INVENTION

Downy mildew, caused by *Plasmopara viticola,* is a major disease of grapevine that can cause significant impact on the yield. It is characterized by the presence of oil spots on the surface of leaves and white down that can be seen on the underside of the leaves, canes and bunches in periods of high humidity.

*Plasmopara viticola,* the causal agent of grapevine downy mildew, is the most devastating disease of the grapevine in climates with relatively warm and humid summers. The impact it has on the yield is typically reduction of 20-50% but in extreme cases, it can go up to the 100% (for a review see: Gessler, C. et al. (2011) Plasmopara viticola: a review of knowledge on downy mildew of grapevine and effective disease management. Phytopathologia Mediterranea 50(1):3-44)).

*Plasmopara viticola* is a heterothallic oomycete that overwinters as oospores in leaf litter and soil. In the spring, oospores germinate to produce macrosporangia, which under wet condition release zoospores. Zoospores are splashed by rain into the canopy, where they swim to and infect through stomata. After 7-10 days, yellow lesions appear on foliage. During favourable weather, the lesions sporulate and new secondary infections occur (Kennely et al. (2007). Primary Infection, Lesion Productivity, and Survival of Sporangia in the Grapevine Downy Mildew Pathogen Plasmopara viticola. Phytopathology 97: 512-22; Compendium of Grape Diseases, Disorders and Pests. Second Edition. The American Phytopathological Society (2015) pp. 46-51)). Most commonly the diseases is treated by copper-based methods, for example, copper sulfate (3-4%) or (1-1.5%), depending on the level of the risk of infection, is used (Gessler, C. et al. (2011) Plasmopara viticola: a review of knowledge on downy mildew of grapevine and effective disease management. Phytopathologia Mediterranea 50(1):3-44). Although this treatment may be sufficient at some of the occasions, copper is known to accumulate in the environment and higher concentrations are known to be toxic to humans (Casarett, L. et al. (1996) Casarett & Doull's Toxicology, The Basic Science of Poisons (5th ed.). McGraw-Hill. p.715).

Another method for the disease control includes the reduction of risk by carefully choosing the location, soil, drainage, soil and irrigation systems. This method obviously has its limitations since it works only at the stage of planning on establishing the vineyards. It cannot be used on already established vineyards.

Additionally, there are also certain canopy practices (e.g. low planting density, vine trimming, hedging, shoot thinning) which can make the leaves drier and therefore less susceptible to the downy mildew (Wearing L.P. et al. (1999) Grapevine canopy density affects the developments of fungal diseases. Phytopathology 89:S83). Again, the method does not work in very humid areas and therefore is limited to dry and mildly humid areas.

Other methods include chemical-based treatments which can be pre-infection fungicides method which can prevent the zoospores to enter the leaf stomata. Also, post-infection fungicides can be used as soon as possible after infection to kill the pathogen tissues inside the leaves. Pre-infection fungicides are, for example, phthalimides, dithiocarbamates, chlorothalonil and dithianon. Both pre and post infection activity have several compound classes: phenylamides and strobilurines (Nicholas et al. (1994) Diseases and Pests. Cowandilla, Australia: Winetitles; Wong and Wilcox (2001) Heterothalism in Plasmopara viticola. Plant Pathology 50(4):427-432). Another group of compounds that have post-infection activity are phosphonates (Nicholas et al. (1994) Diseases and Pests. Cowandilla, Australia: Winetitles). All chemical-based methods have negative impact on ecological systems and very often can cause negative impact on human and/or animal health. Additionally, *Plasmopara viticola* is a pathogen which quite easily becomes resistant to various chemical agents so it is necessary to apply substances with different mechanisms of action in order to have the effective treatment against it.

Another options include biological control using microorganisms (e.g. *Epicoccum nigrum* - a plant pathogen, a widespread fungus which produces coloured pigments can be used as antifungal agents against other pathogenic fungi). However, these solutions are relatively non efficient (Gessler, C. et al. (2011) Plasmopara viticola: a review of knowledge on downy mildew of grapevine and effective disease management. Phytopathologia Mediterranea 50(1):3-44).

The present invention describes method wherein the natural extract of *Fraxinus ornus* has been surprisingly found to be efficient against *Plasmopara viticola* and at the same time does not have negative effect on the environment as well as human health.

### BRIEF DESCRIPTION OF THE INVENTION

The invention relates to the method of extraction from part of the bark of *Fraxinus ornus* and use thereof against sporulation of *Plasmopara viticola,* causative agent of grapevine downy mildew.

### BRIEF DESCRIPTIONS OF THE FIGURES

Figure 1 Set up of the experiment aiming to examine the efficacy of the *Fraxinus ornus* extract
Figure 2 Sporulation of the *Plasmopara viticola* in the control sample (without any treatment)
Figure 3 Lack of sporulation in sample where *Fraxinus ornus* extract has been applied
Figure 4 Lack of sporulation in sample where commercial fungicide (Nordox, active substance copper oxide) has been applied

### DETAILED DISCRIPTION OF THE INVENTION

Method for preparation of extract from *Fraxinus ornus* comprised following steps:
a) collecting and cutting plant bark into pieces;
b) transferring the chipped bark obtained in step b into the distillation balloon and adding water;
c) distillation is performed for 40 min, and the distillation product is discarded;
d) further distillation is performed for 40 min (distillation from 40 min to 80 min), and again the distillation product is discarded;
e) final distillation is performed from about 80 min to about 120 min, in order to obtain the final distillation product.

The final distillation product showed biological activity in terms of inhibition of sporulation of *Plasmopara viticola* comparable to the activity of commercial fungicide.

Therefore, the extract of *Fraxinus ornus* prepared according to the method of the present invention could be successfully used in the plant protection procedures against pathogen *Plasmopara viticola.*

### EXAMPLE:

### Method for obtaining the extract

Extract of the *Fraxinus ornus* was obtained, according to the method of the invention. *Fraxinus ornus* plant, grown in Montenegro, bark pieces were collected and cut into smaller pieces and transferred into the distillation balloon and water was added. Distillation is performed for 40 min, and the distillation product is discarded. Further distillation is performed for 40 min (distillation from 40 min to 80 min), and again the distillation product is discarded. Final distillation is performed from about 80 min to about 120 min, in order to obtain the final distillation product.

Final distillation product, i.e. *Fraxinus ornus* extract was analysed by GC-MS and the results of this activity is shown in Table 1.

**Table 1 Chemical composition of the Fraxinus ornus extract**

| Relative area under the peak* [%] | COMPOUND |
|---|---|
| 6,97 | Unknown compound, Mr = 131 g/mol |
| 5,10 | Unknown compound, Mr = 131 g/mol |
| 3,03 | Unknown compound, Mr = 154 g/mol |
| 16,13 | 2-(4-Hydroxyphenyl)ethanol |
| 57,09 | 1,6-Anhydro-β-D-glucopyranose |
| 6,59 | Homovanillyl alcohol |
| 5,09 | Tyrosyl acetate |
| 100,00 | TOTAL |

| | |
|---|---|
| * Relative area under the peak relates to the amount of the compound present in the extract in percentage. | |

### Biological efficacy testing

Testing was performed in the laboratory setting in order to examine the potential of the extract as antifungal agent against *Plasmopara viticola.*

Healthy leaves of grapevine (*Vitis vinifera*) were cut into discs having approximately diameter equal to 9 mm and were positioned on the sterile Petri dish with potato-dextrose agar growth medium. After that 10 µl suspension of *Plasmopara viticola* was applied to these grapevine leaves discs.

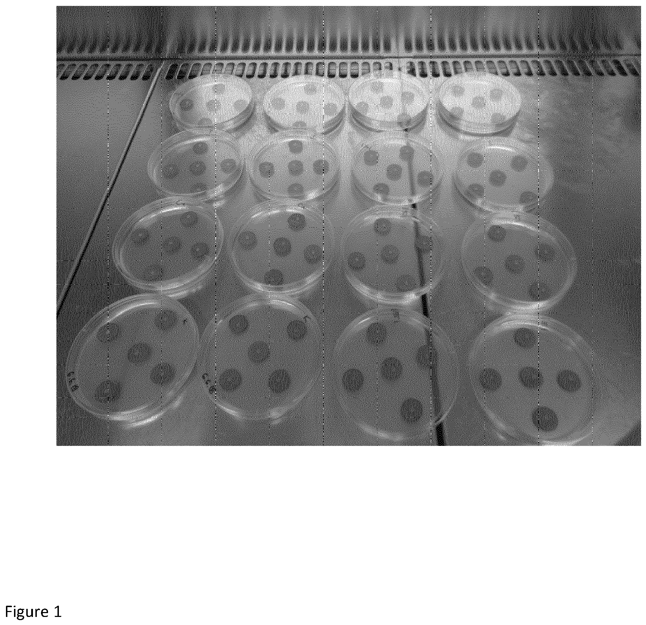

In order to compare the activity of *Fraxinus ornus* extract with known fungicides, altogether three different samples were applied to the discs inoculated with spores. First one comprised 10 µl of the *Fraxinus ornus* extract, second one 10 µl of commercial fungicide based on copper-oxide (Nordox) while the third one served as an untreated control since 10 µl of sterile water was added (Figure 1).

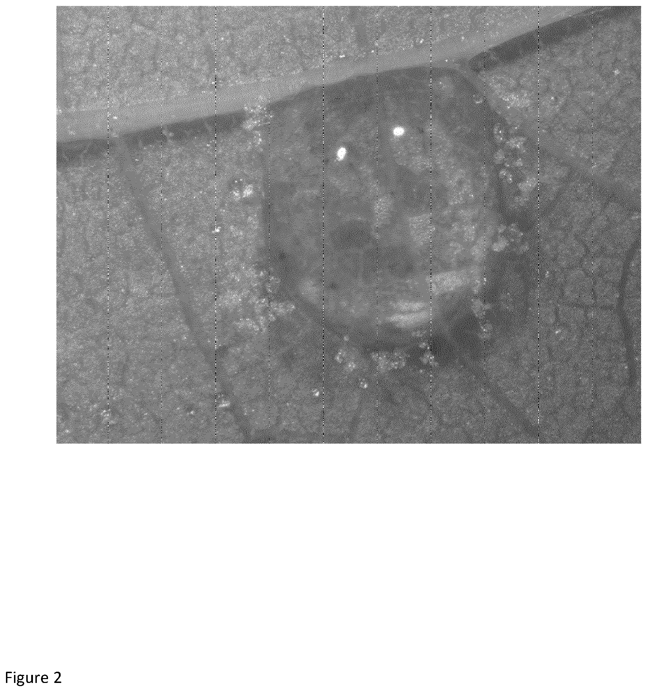

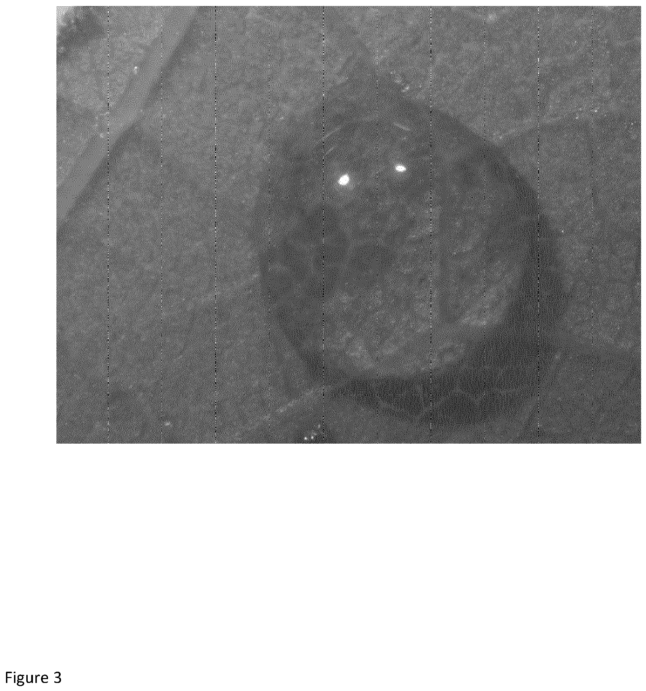

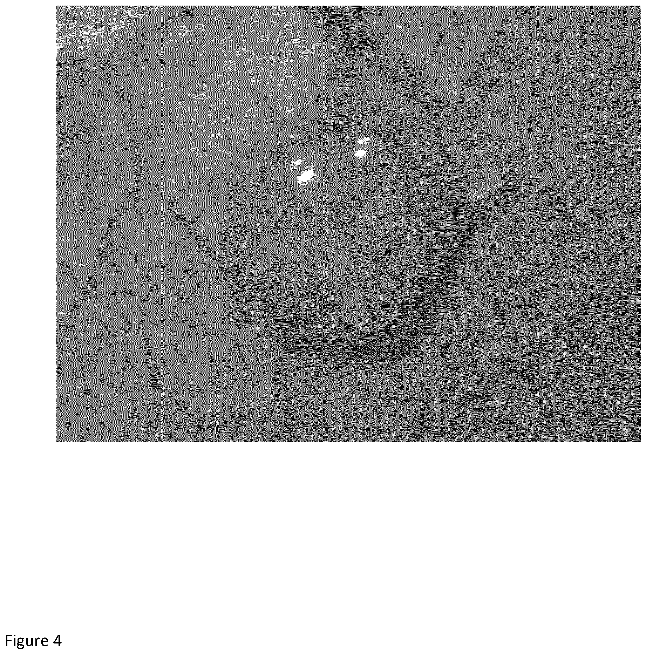

All Petri dishes were incubated at 23°C and after 6 days, the readings were performed. As shown on Figure 2, the *Plasmopara viticola* sporulated in the untreated control while the sporulation was equally inhibited in the sample containing *Fraxinus ornus* extract (Figure 3) and the known fungicide (Figure 4). The readings were repeated on two more occasions (on 4^{th} and 6^{th} day after the first reading) and the results remained the same.

## Claims

1. Method for preparation of extract from *Fraxinus ornus* comprising:
a) collecting and cutting plant bark into pieces;
b) transferring the chipped bark obtained in step b into the distillation balloon and adding water;
c) distillation is performed for 40 min, and the distillation product is discarded;
d) further distillation is performed for 40 min (distillation from 40 min to 80 min), and again the distillation product is discarded;
e) final distillation is performed from about 80 min to about 120 min, in order to obtain the final distillation product.

2. Extract from *Fraxinus ornus* obtainable by process of claim 1.

3. Use of extract of claim 2 in plant protection against grapevine downy mildew (*Plasmopara viticola*)*.*
